# EUROPEAN PATENT SPECIFICATION

(11) **EP 4 575 391 B1**
(45) Date of publication and mention of the grant of the patent: **07.10.2026**
(21) Application number: 24217678.2
(22) Date of filing: 05.12.2024
(51) Int. Cl.: G01C 1/00, G06F 1/16, H04M 1/02

(54) **IMU PERFORMANCE BOOST ON FOLDABLE DEVICES**
IMU-LEISTUNGSVERSTÄRKUNG AUF FALTBAREN VORRICHTUNGEN
AMPLIFICATION DE PERFORMANCE D'UNITES DE MESURES INERTIELLES SUR DES DISPOSITIFS PLIABLES

(30) Priority: 20.12.2023 US 202318391359
(43) Date of publication of application: 25.06.2025
(73) Proprietor: STMicroelectronics International N.V., 1228 Plan-les-Ouates, Geneva (CH)
(72) Inventor: RIZZARDINI, Federico, 20019 SETTIMO MILANESE (MI) (IT); BRACCO, Lorenzo, 10034 CHIVASSO (TO) (IT); BIANCO, Marco, 20090 CESANO BOSCONE (MI) (IT)
(74) Representative: Studio Torta S.p.A.

(56) References cited:
- EP-A1- 4 283 435
- US-A1- 2023 027 806

## Description

### BACKGROUND

### Technical Field

The present invention relates to foldable electronic devices, and, more particularly, to processing sensor data in foldable electronic devices.

### Description of the Related Art

Foldable electronic devices typically include a top lid and a bottom lid. Two examples of foldable electronic devices are laptop computers and foldable smartphones. In the example of foldable smartphones, a screen may be implemented across both the top lid and the bottom lid. A camera or other types of image sensors may be implemented in the top lid. In a laptop computer, a keyboard is typically implemented in the bottom lid. A display is typically mounted in the top lid.

In some cases, sensors may be implemented in both the bottom lid and the top lid of foldable electronic devices. However, there may be various challenges associated with processing signals from the multiple sensors. It would be beneficial to improve the processing of signals in foldable electronic devices.

Document EP 4 283 435 Al discloses a foldable device and method for lid angle detection.

All of the subject matter discussed in the Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### BRIEF SUMMARY

The invention is set out in the annexed claims. A computer-implemented method and device are provided in claims 1 and 10. Further embodiments are provided by the dependent claims.

Embodiments of the present disclosure provide improved utilization of sensor data from multiple inertial measurement units (IMUs) in a foldable electronic device. A foldable electronic device includes a first lid and a second lid rotatably coupled together via a hinge. A first IMU is implemented in the first lid and generates first sensor data. A second IMU is implemented in the second lid and generates second sensor data. As a user utilizes the foldable electronic device, the angle of rotation between the first lid and the second lid may vary. Embodiments of the present disclosure detect the angle of rotation between the first and second lids and then apply a rotation matrix to the second sensor data to generate rotated second sensor data. Embodiments of the present disclosure combine the first sensor data with the rotated second sensor data in order to generate combined sensor data. The combined sensor data has a greater accuracy than either of the first or second sensor data.

In one embodiment, a method includes generating first sensor data with a first inertial measurement unit in a first lid of a foldable electronic device, generating second sensor data with a second inertial measurement unit in a second lid of the foldable electronic device, and detecting a rotation angle between the first lid and the second lid based on the first and second sensor data. The method includes generating rotated second sensor data by adjusting the second sensor data based on the rotation angle and generating combined sensor data by combining the first sensor data and the rotated second sensor data.

In one embodiment, an electronic device includes a first lid including a first inertial measurement unit configured to generate first inertial sensor data and a second lid including a second inertial measurement unit configured to generate second inertial sensor data. The electronic device includes a sensor processing unit configured to detect a rotation angle between the first lid and the second lid based on the first sensor data and the second sensor data, generate rotated second sensor data by adjusting the second sensor data based on the rotation angle, and generate combined sensor data by combining the first sensor data and the rotated second sensor data.

In one embodiment, a foldable smartphone includes a first lid including a first inertial measurement unit configured to generate first inertial sensor data, a hinge coupled to the first lid, and a second lid rotatably coupled to the first lid by the hinge and including a second inertial measurement unit configured to generate second inertial sensor data. The foldable smartphone includes a sensor processing unit including a lid angle module configured to detect an angle of rotation between the first and second lids based on the first and second sensor data, a rotation module configured to generate rotated second sensor data by adjusting the second sensor data based on the angle of rotation, and a combiner module configured to generate combined sensor data from the first sensor data and the rotated second sensor data.

### BRIEF DESCRIPTION OF THE SEVERAL VIEWS OF THE DRAWINGS

Figure 1 is a block diagram of a foldable electronic device including multiple IMUs, in accordance with one embodiment.
Figure 2 is a functional diagram of a sensor processing unit of a foldable electronic device, in accordance with one embodiment.
Figure 3 is a schematic diagram of a foldable electronic device, in accordance with one embodiment.
Figures 4A-4C are various views of a foldable smartphone including multiple IMUs, in accordance with one embodiment.
Figures 5A-5B are various views of a laptop computer including multiple IMUs, in accordance with one embodiment.
Figure 6 is a flow diagram of a method for operating a foldable electronic device, in accordance with one embodiment.

### DETAILED DESCRIPTION

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known systems, components, and circuitry associated with integrated circuits have not been shown or described in detail, to avoid unnecessarily obscuring descriptions of the embodiments.

Unless the context requires otherwise, throughout the specification and claims which follow, the word "comprise" and variations thereof, such as, "comprises" and "comprising" are to be construed in an open, inclusive sense, that is as "including, but not limited to." Further, the terms "first," "second," and similar indicators of sequence are to be construed as interchangeable unless the context clearly dictates otherwise.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics can be combined in any suitable manner in one or more embodiments.

As used in this specification and the appended claims, the singular forms "a," "an," and "the" include plural referents unless the content clearly dictates otherwise. It should also be noted that the term "or" is generally employed in its broadest sense, that is as meaning "and/or" unless the content clearly dictates otherwise.

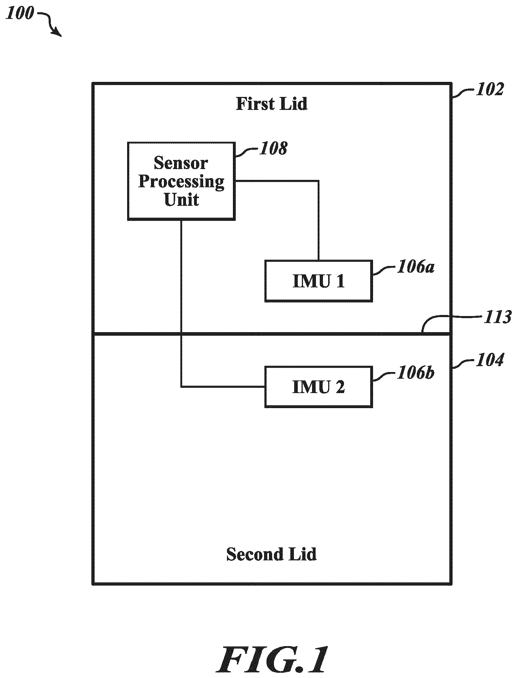

Figure 1 is a block diagram of foldable electronic device 100, in accordance with one embodiment. The foldable electronic device 100 includes a first lid 102 and a second lid 104. A first IMU 106a is implemented in the first lid 102. A second IMU 106b is implemented in the second lid 104. The foldable electronic device 100 includes a sensor processing unit 108. As will be set forth in more detail below, the components of the foldable electronic device 100 cooperate to generate sensor data with improved accuracy.

The first lid 102 and the second lid 104 of the foldable electronic device 100 enable folding and unfolding of the electronic device 100. More particularly, the top lid 102 and the bottom lid 104 are coupled to a hinge 113. The hinge 113 enables the top lid 102 and the bottom lid 104 to be rotated relative to each other. When the rotation angle between the top lid 102 and the bottom lid 104 is 0°, the first lid 102 and the second lid 104 are pressed together. As the rotation angle increases from 0°, the first lid 102 and the second lid 104 are rotated away from each other.

Though not shown in Figure 1, the foldable electronic device 100 includes a display implemented on one or both of the first lid 102 and the second lid 104. When the rotation angle is 0° and the first lid 102 and the second lid 104 are pressed together, the display is inaccessible to a user. The user opens the foldable electronic device by rotating the first lid 102 and the second lid 104 away from each other to provide access to the display. This also provides access to inputs such as a keyboard or touchscreen implemented on one or both of the first lid 102 and the second lid 104.

The foldable electronic device 100 includes various software applications that utilize inertial sensor data from the IMUs 106. Examples of such software applications can include map applications that track the orientation or traveling direction of the foldable electronic device 100, games that track the orientation or motion of the foldable electronic device 100, fall detection applications, and many other types of applications. The accuracy of such applications depends, in part, on the accuracy of the sensor data from the IMUs 106.

The IMUs 106 each include one or more inertial sensors. In one embodiment, each IMU 106 includes a three-axis accelerometer and a three-axis gyroscope. The accelerometer senses acceleration in each of the three axes and generates sensor signals indicative of accelerations on each axis. The gyroscope senses angular velocity around each of the three axes and generates sensor signals indicative of the angular velocities on each axis.

Each IMU 106 can include digital processing circuitry. In particular, the inertial sensors initially generates analog sensor signals indicative of the accelerations or angular velocities. The digital processing circuitry of each IMU receives the analog sensor signals and processes the analog sensor signals to generate digital sensor data. Accordingly, each IMU 106 can include one or more analog-to-digital converters (ADC) to convert the analog signals to digital signals. Each IMU 106 can include additional signal processing circuitry to process or otherwise condition the sensor data for further analysis, as will be described in more detail below. In one embodiment, each IMU 106 includes one or more inertial sensors and an application specific integrated circuit (ASIC). In one embodiment, the inertial sensors and the ASIC are on separate integrated circuit dies. Alternatively, the inertial sensors and the ASIC are implemented on a single system on chip integrated circuit die. Each IMU 106 can include additional components or circuitry without departing from the scope of the present disclosure.

The foldable electronic device 100 includes a sensor processing unit 108. The sensor processing unit 108 is coupled to the first IMU 106a and the second IMU 106b. The sensor processing unit 108 receives first sensor data from the IMU 106a and second sensor data from the IMU 106b. Each set of sensor data can include accelerometer and gyroscope data as described above. Although the sensor processing unit 108 is shown as separate from the IMU 106a and the IMU 106b, in practice, the sensor processing unit 108 can be part of either the first IMU 106a or the second IMU 106b.

The sensor processing unit 108 receives the first and second sensor data from the IMUs 106a and 106b and generates combined sensor data. The combined sensor data is more accurate than either the first sensor data or the second sensor data. The sensor processing unit 108 can then provide the combined sensor data to other components or applications of the foldable electronic device 100. The other applications or components can then utilize the combined sensor data to more effectively or accurately perform their functions.

One possible solution to generate the combined sensor data is to perform a simple averaging of the first sensor data and the second sensor data. If s1 represents the first sensor data, s2 represents the second sensor data, and sc represents the combined sensor data, then the combined sensor data sc can be generated by performing a simple averaging of the first and second sensor data in the following manner: ${s}_{c} = \frac{{s}_{1} + {s}_{2}}{2} .$ If the noise level of the first sensor data s1, measured by the standard deviation σ₁, is approximately the same as the noise level of the second sensor data s2, measured by the standard deviation σ₂, then the noise level of the combined sensor data will be less than the noise level of both the first and second sensor data, as set forth in the following relationship: ${σ}_{c} ≅ \frac{{σ}_{1}}{\sqrt{2}} ≅ \frac{{σ}_{2}}{\sqrt{2}} .$ However, if the noise levels are not approximately the same, then the noise level of the combined sensor data may be worse than the noise level of either the first or second sensor data alone. At the same time, statistically, using the combined sensor data provides more accurate data than just using the first or the second sensor data alone.

Another possible solution to generate the combined sensor data is to perform a weighted average according to the maximal ratio combining technique. In this case, a weighting value ${σ}_{2}^{2}$ based on the noise level of the second sensor data is applied to the first sensor data s1 and a weighting value ${σ}_{1}^{2}$ based on the noise level of the first sensor data is applied to the second sensor data s2. The combined sensor data sc is generated as a weighted average in the following manner: ${s}_{c} = \frac{{σ}_{2}^{2} {s}_{1} + {σ}_{1}^{2} {s}_{2}}{{σ}_{1}^{2} + {σ}_{2}^{2}}$ Generating the combined sensor data with a weighted average can provide improved accuracy (less noise) than both the first sensor data and the second sensor data even when the first and second sensor data have differing noise levels. The overall noise of the combined sensor data from the weighted average is given by the following relationship: ${σ}_{c} = \sqrt{\frac{{σ}_{1}^{2} {σ}_{2}^{2}}{{σ}_{1}^{2} + {σ}_{2}^{2}}}$ However, the drawback of the weighted average is that the noise level of each IMU 106 may need to be known beforehand. Accordingly, it is beneficial to ascertain the noise values in the factory.

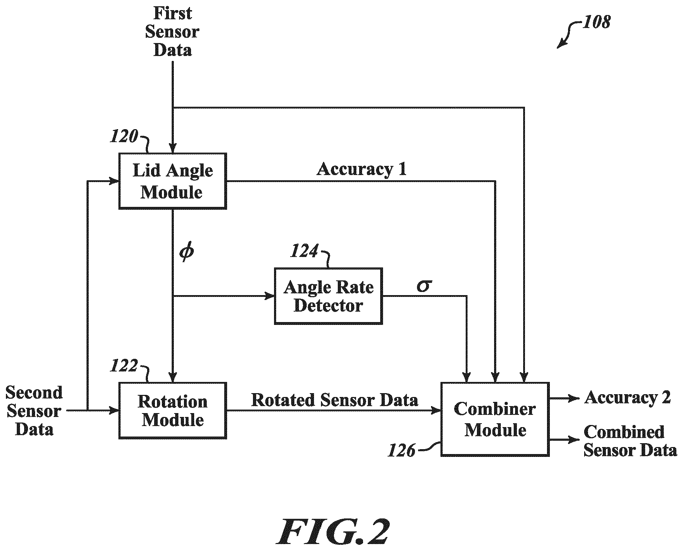

The sensor processing unit 108 of Figure 1, in accordance with principles of the present disclosure, utilizes a solution in which accurate combined sensor data is generated based, in part, on the rotation angle between the first lid 102 and the second lid 104. The sensor processing unit 108 detects the rotation angle between the first lid 102 and the second lid 104. The sensor processing unit 108 then generates rotated second sensor data by adjusting the second sensor data based on the rotation angle. The sensor processing unit 108 then generates combined sensor data by combining the first sensor data with the rotated second sensor data. The combined sensor data can be generated by performing a simple average, a weighted average, or another type of combination of the first sensor data and the rotated second sensor data. The result is highly accurate combined sensor data. Further details regarding the generation of the rotated second sensor data and the combined sensor data is provided in relation to Figure 2.

In one embodiment, it is beneficial for the first IMU 106a and the second IMU 106b to be relatively close to the hinge 113. Furthermore, it is beneficial for the first IMU 106a and the second IMU 106b to be at a same distance from the hinge 113. Accordingly, in one embodiment, the first IMU 106a and the second IMU 106b are at a same distance from the hinge 113. This can help increase the accuracy of the combined sensor data.

Figure 2 is a functional diagram of a sensor processing unit 108, in accordance with one embodiment. The sensor processing unit 108 of Figure 2 is one example of the sensor processing unit 108 of Figure 1.

The sensor processing unit 108 includes a lid angle module 120. Lid angle module 120 receives the first sensor data from the IMU 106a and the second sensor data from the IMU 106b. The lid angle module 120 calculates the rotation angle ϕ based on the first sensor data and the second sensor data. The rotation angle ϕ corresponds to the angle between the first lid 102 and the second lid 104. The lid angle module 120 also calculates a first accuracy value based on the first sensor data and the second sensor data. The lid angle module 120 can include circuitry, memory, software instructions, and other resources for calculating, measuring, or looking up the rotation angle ϕ and calculating the first accuracy based on the first sensor data and the second sensor data.

The sensor processing unit 108 includes a rotation module 122. The rotation module 120 is coupled to the lid angle module 120. The rotation module 120 receives the second sensor data from the IMU 106b and the rotation angle ϕ from the lid angle module 120. The rotation module 122 generates rotated second sensor data from the second sensor data by adjusting the second sensor data based on the rotation angle ϕ.

In one embodiment, the rotation module 122 generates the rotated second sensor data by aligning the second sensor data with the first sensor data. Accordingly, the rotation module 122 can apply a rotation to each axis of the second sensor data based on the rotation angle ϕ in order to generate the rotated second sensor data.

In one embodiment, the rotation module 122 generates the rotated second sensor data by applying a rotation matrix to the second sensor data. More particularly, the rotation module 122 multiplies the second sensor data by a rotation matrix. The rotation module 122 generates a rotation matrix R based on the rotation angle ϕ. More particularly, the rotation module 122 identifies an angle *θ* = π - ϕ (or *θ* = 180° - ϕ) and generates the rotation matrix R based on the angle *θ*. In one embodiment, the rotation matrix R is given as follows: $R = \left[\begin{matrix}1 & 0 & 0 \\ 0 & cos θ & - sin θ \\ 0 & sin θ & cos θ\end{matrix}\right] .$

In one embodiment, applying the rotation matrix R to the second sensor data corresponds to multiplying each sample of the sensor data by the rotation matrix R. In an example in which the second sensor data includes the three axes of accelerometer data and three axes of gyroscope data, each sample of the second sensor data will include a vector including an acceleration value for each of the three axes of the accelerometer of the second IMU 106b. Each sample of the second sensor data will also include a vector including an angular velocity value for each of the three axes of the gyroscope of the second IMU 106b. Both the acceleration vector and the angular velocity vector are multiplied by the rotation matrix R in order to generate the rotated second sensor data. Accordingly, each sample of the rotated second sensor data includes a rotated accelerometer vector and a rotated gyroscope vector.

As described previously, applying a rotation matrix R to the second sensor data corresponds to aligning the axes of the second IMU 106b with the axes of the first IMU 106a. The variances utilized for the maximal ratio combining technique, indicative of the noise level of each sensor axis, are the variances of the rotated IMU, which are computed at runtime for every processed sample as follows: $θ = π - ϕ ,$ ${σ}_{{x}_{2 r}}^{2} = {σ}_{{x}_{2}}^{2} ,$ ${σ}_{{y}_{2 r}}^{2} = {cos}^{2} θ {σ}_{{y}_{2}}^{2} + {sin}^{2} θ {σ}_{{z}_{2}}^{2} ,$ and ${σ}_{{z}_{2 r}}^{2} = {sin}^{2} θ {σ}_{{y}_{2}}^{2} + {cos}^{2} θ {σ}_{{z}_{2}}^{2} ,$ where *σx*₂*, σy*₂ and σ_{*z*2} correspond to the noise levels associated with the x, y, and z axes of the second IMU 106b and have been measured in factory and stored in a memory of the sensor processing unit 108.

The combiner module 126 receives the rotated second sensor data and the first sensor data. The combiner module 126 generates combined sensor data by combining the first sensor data with the rotated second sensor data. The combiner module 126 can generate the combined sensor data based on a simple average of the first sensor data and the rotated second sensor data as described previously, a weighted average (according to the maximal ratio combining technique) of the first sensor data and the rotated second sensor data as described previously, or another suitable manner. The combiner module 126 can include processing resources, memory resources, software resources to generate the combined sensor data.

In one embodiment, the combiner module 126 generates a second accuracy value. The second accuracy value corresponds to an overall accuracy of the combined sensor data. The second accuracy value can be generated based on the first accuracy value describing the accuracy of the angle of rotation. In one embodiment, the combiner module 126 receives the first accuracy value from the lid angle module 120. The combiner module 126 compares the first accuracy value to a threshold value. If the first accuracy value is lower than the threshold value, then the combiner module 126 does not combine the first sensor data with the rotated second sensor data. Instead, the combiner module 126 outputs the first sensor data and/or the rotated second sensor data rather than combined sensor data. Accordingly, if the first accuracy value is lower than the threshold value, the combiner module 126 stops generating combined sensor data. If the first accuracy value is greater than or equal to the threshold value, then the combiner module 126 generates the combined sensor data as described above.

In one embodiment, it is beneficial to implement sensitivity and offset calibration for both accelerometer and gyroscope of each IMU 106. Accelerometer sensitivity and offset calibration can be executed at runtime via 6-points tumble calibration or 9-points calibration, or the like. Gyroscope sensitivity calibration can be implemented in factory. Gyroscope offset calibration can be implemented at runtime (e.g., when the device is detected being steady, the gyroscope offset is computed). Sensor synchronization plays a key role while moving the device in order to minimize the difference in the sampling time. Two IMUs can be synchronized providing an external synchronization signal as input (e.g., STMicroelectronics IMUs ODR-triggered mode or Data Enable mode). Sensor placement plays a role while moving the device in order to minimize the difference in the sensed physical quantity. Accordingly, it is beneficial to place the sensors as close to each other as possible and symmetrical with respect to the hinge 113 of the device.

In one embodiment, the sensor processing unit 108 includes an angle rate detector 124. The angular rate detector 124 receives the rotation angle ϕ from the lid angle module 120. The angular rate detector 124 detects the rate of change of the rotation angle ϕ and generates an angle change value σ indicating the rate of change of the rotation angle ϕ.

Knowing the rate of change of the rotation angle ϕ can be beneficial to the combiner module 126. This is because if the angle ϕ is changing rapidly, then the accuracy of the combined acceleration data may be compromised. This occurs for example, when a user is rapidly opening or closing the foldable electronic device. In the moment of this opening or closing, the combined sensor data may not be accurate. The angle change value can be calculated based on a standard deviation, a variance, or an approximation of either of these quantities.

In one embodiment, the combiner module 126 receives the angle change value σ from the angle rate detector 124. The combiner module 126 compares the angle change value σ to a threshold value. If the angle change value σ is greater than or equal to the threshold value, then the combiner module 126 does not combine the first sensor data with the rotated second sensor data. Instead, the combiner module 126 outputs the first sensor data and/or the rotated second sensor data rather than combined sensor data. Accordingly, if the angle change value σ is greater than or equal to the threshold value, the combiner module 126 stops generating combined sensor data. If the angle change value σ is less than the threshold value, then the combiner module 126 generates the combined sensor data as described above.

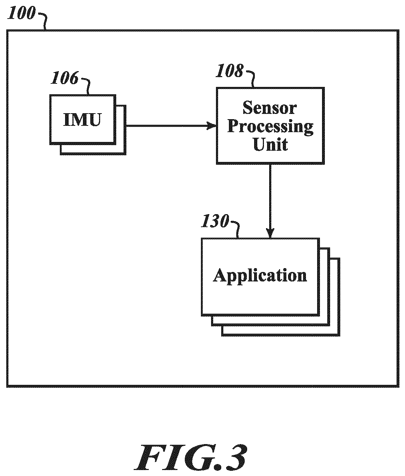

Figure 3 is a block diagram of a foldable electronic device 100, in accordance with one embodiment. The foldable electronic device 100 of Figure 3 is one example of a foldable electronic device of Figure 1. Figure 3 does not illustrate the first lid 102 and the second lid 104. The electronic device 100 includes multiple IMUs 106, as described previously. The electronic device 100 includes a sensor processing unit 108, as described previously. The sensor processing unit 108 is part of one of the IMUs 106 or is separate from all of the IMUs.

The foldable electronic device 100 includes a plurality of applications 130. The applications 130 may correspond to software applications that utilize processing, memory, and the software resources of the foldable electronic device 100 and that receive the combined sensor data from the sensor processing unit 108. Alternatively, the applications 130 can include hardware circuits that receive the combined sensor data from the sensor processing unit 108 and perform a function or generate data based on the combined sensor data. Examples of applications 130 can include games, map applications, orientation applications, fall sensors, collision sensors, driving monitoring applications, or other types of applications. Because the applications 130 utilize the combined sensor data based on the rotation angle ϕ, the applications 130 can operate more effectively because the combined sensor data is more accurate.

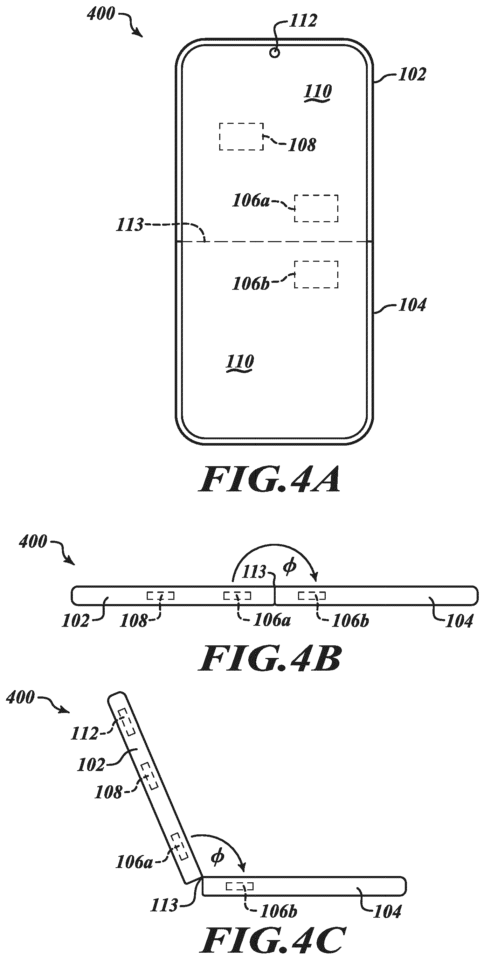

Figure 4A is a top view of a foldable smartphone 400, in accordance with one embodiment. The foldable smartphone 400 is one example of a foldable electronic device 100 of Figure 1. The foldable smartphone 400 includes a first lid 102 and a second lid 104. A display 110 is implemented on both the first lid 102 and the second lid 104. The display 110 can output images to a user of the full smartphone 400. The display 110 can also correspond to a touchscreen. A first IMU 106a is implemented in the first lid 102. A second IMU 106b is implemented in the second lid 104. The sensor processing unit 108 is implemented in the first lid 102, though in practice, the sensor processing unit 108 can be implemented in either the first lid 102 or the second lid 104.

The foldable smartphone 400 includes a hinge 113. The first lid 102 and the second lid 104 can rotate relative to each other around the hinge 113. In the view of Figure 4A, the first lid 102 and the second lid 104 are open with a rotation angle of 180°. As can be seen in Figure 4A, the first IMU 106a and the second IMU 106b are each positioned at an equal distance from the hinge 113. This can help improve the accuracy of the combined sensor data. Furthermore, the first IMU 106a and the second IMU 106b are positioned close to the hinge 113, thereby improving the accuracy of the combined sensor data.

The foldable smartphone 400 includes a camera 112 implemented in the first lid 102. The camera 112 can include a plurality of image sensors including visible light sensors, infrared light sensors, ultraviolet light sensors, or other types of sensors.

Figure 4B is a side view of the foldable smart-phone 400 of Figure 4A. In Figure 4B, the first lid 102 and the second lid 104 have a rotation angle ϕ of 180°. In some embodiments, this corresponds to a maximum rotation angle ϕ.

Figure 4C is a side view of the foldable smart-phone 400 of Figure 4A, with an intermediate rotation angle ϕ. A user of the foldable smart-phone can rotate the first lid 102 and the second lid 104 to any rotation angle between 0° and 180°.

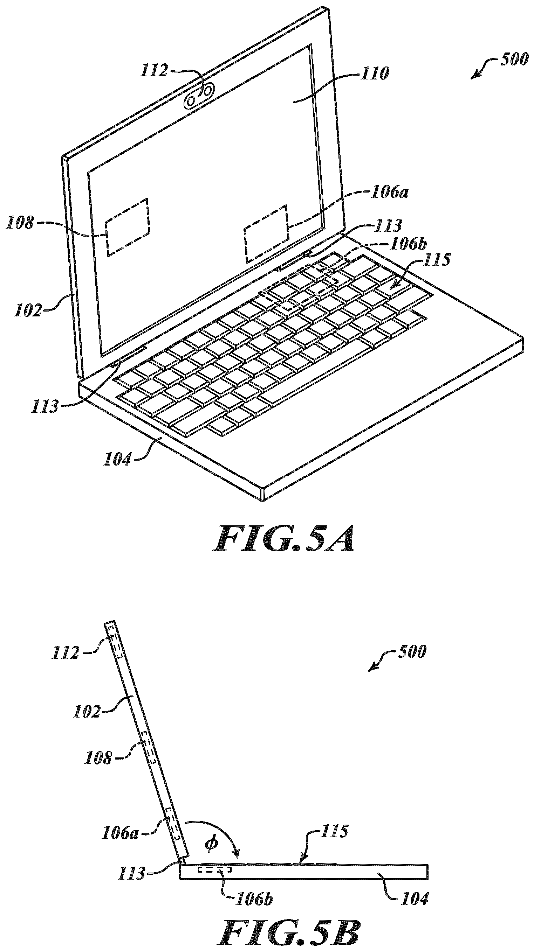

Figure 5A is a perspective view of a laptop computer 500, in accordance with one embodiment. The laptop computer 500 of Figure 5A is one example of a foldable electronic device 100 of Figure 1. The laptop computer 500 includes a first lid 102 and a second lid 104. A display 110 is implemented on a first lid 102. A keyboard 115 is implemented on the second lid 104. A first IMU 106a is implemented in the first lid 102. A second IMU 106b is implemented in the second lid 104. The sensor processing unit 108 is implemented in the first lid 102, though in practice, the sensor processing unit 108 can be implemented in either the first lid 102 or the second lid 104.

The laptop computer 500 includes a hinge 113. The first lid 102 and the second lid 104 can rotate relative to each other around the hinge 113. As can be seen in Figure 5A, the first IMU 106a and the second IMU 106b are each positioned at an equal distance from the hinge 113. This can help improve the accuracy of the combined sensor data. Furthermore, the first IMU 106a and the second IMU 106b are positioned close to the hinge 113, thereby improving the accuracy of the combined sensor data.

The laptop computer 500 includes a camera 112 implemented in the first lid 102. The camera 112 can include a plurality of image sensors including visible light sensors, infrared light sensors, ultraviolet light sensors, or other types of sensors.

Figure 5B is a side view of the laptop computer 500 of Figure 5A, with an intermediate rotation angle ϕ. A user of the laptop computer 500 can rotate the first lid 102 and the second lid 104 to any rotation angle between 0° and a maximum rotation angle based on the design of the laptop computer 500. Principles of the present disclosure extend to a tablet with a detachable keyboard. In one embodiment, the tablet corresponds to the first lid 102 and includes the first IMU 106a and the sensor processing unit 108. The detachable keyboard can correspond to the second lid 104 and can include the second IMU 106b. The tablet and the detachable keyboard can rotate with respect to each other, as described previously.

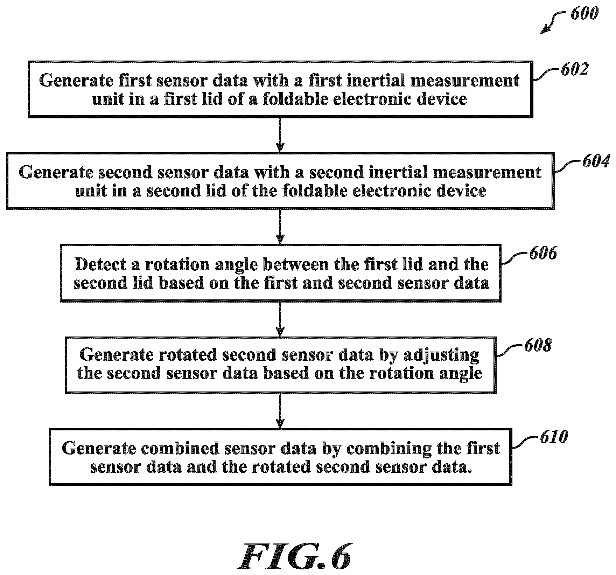

Figure 6 is a flow diagram of a method 600 for operating a foldable electronic device, in accordance with one embodiment. The method 600 can utilize processes, systems, and components described in relation to Figures 1-5. At 602, the method 600 includes generating first sensor data with a first inertial measurement unit in a first lid of a foldable electronic device. At 604, the method 600 includes generating second sensor data with a second inertial measurement unit in a second lid of the foldable electronic device. At 606, the method 600 includes detecting a rotation angle between the first lid and the second lid based on the first and second sensor data. At 608, the method 600 includes generating rotated second sensor data by adjusting the second sensor data based on the rotation angle. At 610, the method 600 includes generating combined sensor data by combining the first sensor data and the rotated second sensor data.

In one embodiment, the adjusting the second sensor data includes applying to the second sensor data a rotation matrix based on the rotation angle.

In one embodiment, the method includes generating a first accuracy value based on the first and second sensor data and generating the combined sensor data based on the first accuracy value.

In one embodiment, the method includes generating an angle change value indicating how fast the rotation angle is changing.

In one embodiment, the method includes generating the combined sensor data if the angle change value is less than a threshold value and stopping generation of the combined sensor data if the angle change value is greater than or equal to the threshold value.

In one embodiment, the method includes generating a second accuracy value for the combined sensor based on the angle change value.

In one embodiment, the first sensor data includes first accelerometer data and first gyroscope data, while the second sensor data includes second accelerometer data and second gyroscope data.

In one embodiment, the combined sensor data includes combined accelerometer data and combined gyroscope data.

In one embodiment, generating combined sensor data includes averaging the first sensor data and the rotated second sensor data.

In one embodiment, generating combined sensor data includes applying a first weight to the first sensor data based on a noise level of the rotated second sensor data, applying a second weight to the rotated second sensor data based on a noise level of the first sensor data, and generating a weighted average of the first sensor data and the rotated second sensor data based on the first weight and the second weight.

In one embodiment, an electronic device includes a first lid including a first inertial measurement unit configured to generate first inertial sensor data and a second lid including a second inertial measurement unit configured to generate second inertial sensor data. The electronic device includes a sensor processing unit configured to detect a rotation angle between the first lid and the second lid based on the first sensor data and the second sensor data, generate rotated second sensor data by adjusting the second sensor data based on the rotation angle, and generate combined sensor data by combining the first sensor data and the rotated second sensor data.

In one embodiment, the electronic device includes a hinge rotatably coupling the first lid to the second lid.

In one embodiment, the sensor processing unit is configured to generate an accuracy value based on the first and second sensor data and generate the combined sensor data based on the first accuracy value.

In one embodiment, the sensor processing unit is configured to generate an angle change value indicating how fast the rotation angle is changing.

In one embodiment, the sensor processing unit is configured to generate the combined sensor data if the angle change value is less than a threshold value and stop generation of the combined sensor data if the angle change value is greater than or equal to the threshold value.

In one embodiment, the second sensor data includes applying to the second sensor data a rotation matrix based on the rotation angle.

In one embodiment, a foldable smartphone includes a first lid including a first inertial measurement unit configured to generate first inertial sensor data, a hinge coupled to the first lid, and a second lid rotatably coupled to the first lid by the hinge and including a second inertial measurement unit configured to generate second inertial sensor data. The foldable smartphone includes a sensor processing unit including a lid angle module configured to detect an angle of rotation between the first and second lids based on the first and second sensor data, a rotation module configured to generate rotated second sensor data by adjusting the second sensor data based on the angle of rotation, and a combiner module configured to generate combined sensor data from the first sensor data and the rotated second sensor data.

The various embodiments described above can be combined to provide further embodiments.

## Claims

1. A computer-implemented method, comprising:
generating (602) first sensor data with a first inertial measurement unit in a first lid of a foldable electronic device;
generating (604) second sensor data with a second inertial measurement unit in a second lid of the foldable electronic device;
detecting (606) a rotation angle (ϕ) between the first lid and the second lid based on the first and second sensor data;
wherein the computer-implemented method further comprises: generating
(608) rotated second sensor data by adjusting the second sensor data based on the rotation angle; and
generating (610) combined sensor data by combining the first sensor data and the rotated second sensor data.

2. The method of claim 1, wherein adjusting the second sensor data includes applying to the second sensor data a rotation matrix based on the rotation angle.

3. The method of claim 1 or 2, comprising:
generating a first accuracy value (120, Accuracy 1) based on the first and second sensor data; and
generating the combined sensor data (126) based on the first accuracy value.

4. The method of claim 3, comprising generating an angle change value (σ) indicating how fast the rotation angle (ϕ) is changing.

5. The method of claim 4, comprising:
generating the combined sensor data if the angle change value is less than a threshold value; and
stopping generation of the combined sensor data if the angle change value is greater than or equal to the threshold value.

6. The method of claim 3, comprising generating a second accuracy value (126, Accuracy 2) for the combined sensor based on the angle change value.

7. The method of anyone of the preceding claims, wherein the first sensor data includes first accelerometer data and first gyroscope data, while the second sensor data includes second accelerometer data and second gyroscope data, and wherein the combined sensor data includes combined accelerometer data and combined gyroscope data.

8. The method of anyone of the preceding claims, wherein generating combined sensor data includes averaging the first sensor data and the rotated second sensor data.

9. The method of anyone of the preceding claims, wherein generating combined sensor data includes:
applying a first weight to the first sensor data based on a noise level of the rotated second sensor data;
applying a second weight to the rotated second sensor data based on a noise level of the first sensor data; and
generating a weighted average of the first sensor data and second sensor data based on the first weight and the second weight.

10. An electronic device, comprising:
a first lid (102) including a first inertial measurement unit (106a) configured to generate first inertial sensor data;
a second lid (104) including a second inertial measurement unit (106b) configured to generate second inertial sensor data;
a sensor processing unit (108) configured to:
detect (606) a rotation angle (ϕ) between the first lid and the second lid based on the first sensor data and the second sensor data;
wherein the sensor processing unit is further configured to: generate (608) rotated second sensor data by adjusting the second sensor data based on the rotation angle; and
generate (610) combined sensor data by combining the first sensor data and the rotated second sensor data.

11. The electronic device of claim 10, wherein the first lid (102) is rotatably coupled to the second lid (104), in particular by a hinge (113), and wherein the sensor processing unit (108) is configured to generate a first accuracy value (Accuracy 1) based on the first and second sensor data and generate the combined sensor data based on the first accuracy value.

12. The electronic device of claim 11, wherein the sensor processing unit (108) is configured to generate an angle change value (σ) indicating how fast the rotation angle (ϕ) is changing.

13. The electronic device of claim 12, wherein the sensor processing unit (108) is configured to:
generate the combined sensor data if the angle change value (σ) is less than a threshold value; and
stop generation of the combined sensor data if the angle change value (σ) is greater than or equal to the threshold value.

14. The electronic device of anyone of claims 11-13, wherein adjusting the second sensor data includes applying to the second sensor data a rotation matrix based on the rotation angle.

15. A foldable smartphone, comprising an electronic device according to anyone of claims 10-14.

## Patentansprüche

1. Computerimplementiertes Verfahren, das Folgendes umfasst:
Erzeugen (602) von ersten Sensordaten mit einer ersten Trägheitsmesseinheit in einem ersten Deckel einer faltbaren elektronischen Vorrichtung;
Erzeugen (604) von zweiten Sensordaten mit einer zweiten Trägheitsmesseinheit in einem zweiten Deckel der faltbaren elektronischen Vorrichtung;
Detektieren (606) eines Rotationswinkels (ϕ) zwischen dem ersten Deckel und dem zweiten Deckel basierend auf den ersten und zweiten Sensordaten;
wobei das computerimplementierte Verfahren ferner Folgendes umfasst:
Erzeugen (608) von rotierten zweiten Sensordaten durch Anpassen der zweiten Sensordaten basierend auf dem Rotationswinkel; und
Erzeugen (610) von kombinierten Sensordaten durch Kombinieren der ersten Sensordaten und der rotierten zweiten Sensordaten.

2. Verfahren nach Anspruch 1, wobei das Anpassen der zweiten Sensordaten das Anwenden einer Rotationsmatrix auf die zweiten Sensordaten basierend auf dem Rotationswinkel enthält.

3. Verfahren nach Anspruch 1 oder 2, das Folgendes umfasst: Erzeugen eines ersten Genauigkeitswerts (120, Genauigkeit 1) basierend auf den ersten und zweiten Sensordaten; und Erzeugen der kombinierten Sensordaten (126) basierend auf dem ersten Genauigkeitswert.

4. Verfahren nach Anspruch 3, umfassend das Erzeugen eines Winkeländerungswerts (σ), der angibt, wie schnell sich der Rotationswinkel (ϕ) ändert.

5. Verfahren nach Anspruch 4, das Folgendes umfasst:
Erzeugen der kombinierten Sensordaten, wenn der Winkeländerungswert kleiner als ein Schwellenwert ist; und Beenden der Erzeugung der kombinierten Sensordaten, wenn der Winkeländerungswert größer oder gleich dem Schwellenwert ist.

6. Verfahren nach Anspruch 3, umfassend das Erzeugen eines zweiten Genauigkeitswerts (126, Genauigkeit 2) für den kombinierten Sensor basierend auf dem Winkeländerungswert.

7. Verfahren nach einem der vorhergehenden Ansprüche, wobei die ersten Sensordaten erste Beschleunigungsdaten und erste Gyroskopdaten enthalten, während die zweiten Sensordaten zweite Beschleunigungsdaten und zweite Gyroskopdaten enthalten, und wobei die kombinierten Sensordaten kombinierte Beschleunigungsdaten und kombinierte Gyroskopdaten enthalten.

8. Verfahren nach einem der vorhergehenden Ansprüche, wobei das Erzeugen der kombinierten Sensordaten das Durchschnittsbilden der ersten Sensordaten und der rotierten zweiten Sensordaten enthält.

9. Verfahren nach einem der vorhergehenden Ansprüche, wobei das Erzeugen der kombinierten Sensordaten Folgendes enthält:
Anwenden eines ersten Gewichts auf die ersten Sensordaten basierend auf einem Rauschpegel der rotierten zweiten Sensordaten;
Anwenden eines zweiten Gewichts auf die rotierten zweiten Sensordaten basierend auf einem Rauschpegel der ersten Sensordaten; und
Erzeugen eines gewichteten Durchschnitts der ersten Sensordaten und der zweiten Sensordaten basierend auf dem ersten Gewicht und dem zweiten Gewicht.

10. Elektronische Vorrichtung, die Folgendes umfasst:
einen ersten Deckel (102), der eine erste Trägheitsmesseinheit (106a) enthält, die so konfiguriert ist, dass sie erste Trägheitssensordaten erzeugt;
einen zweiten Deckel (104), der eine zweite Trägheitsmesseinheit (106b) enthält, die so konfiguriert ist, dass sie zweite Trägheitssensordaten erzeugt;
eine Sensorverarbeitungseinheit (108), die für Folgendes konfiguriert ist:
Detektieren (606) eines Rotationswinkels (ϕ) zwischen dem ersten Deckel und dem zweiten Deckel basierend auf den ersten Sensordaten und den zweiten Sensordaten;
wobei die Sensorverarbeitungseinheit ferner für Folgendes konfiguriert ist:
Erzeugen (608) von rotierten zweiten Sensordaten durch Anpassen der zweiten Sensordaten basierend auf dem Rotationswinkel; und
Erzeugen (610) von kombinierten Sensordaten durch Kombinieren der ersten Sensordaten und der rotierten zweiten Sensordaten.

11. Elektronische Vorrichtung nach Anspruch 10, wobei der erste Deckel (102) drehbar mit dem zweiten Deckel (104) gekoppelt ist, insbesondere durch ein Scharnier (113), und wobei die Sensorverarbeitungseinheit (108) so konfiguriert ist, dass sie einen ersten Genauigkeitswert (Genauigkeit 1) basierend auf den ersten und zweiten Sensordaten erzeugt und die kombinierten Sensordaten basierend auf dem ersten Genauigkeitswert erzeugt.

12. Elektronische Vorrichtung nach Anspruch 11, wobei die Sensorverarbeitungseinheit (108) so konfiguriert ist, dass sie einen Winkeländerungswert (σ) erzeugt, der angibt, wie schnell sich der Rotationswinkel (ϕ) ändert.

13. Elektronische Vorrichtung nach Anspruch 12, wobei die Sensorverarbeitungseinheit (108) für Folgendes konfiguriert ist:
Erzeugen der kombinierten Sensordaten, wenn der Winkeländerungswert (σ) kleiner als ein Schwellenwert ist; und
Beenden der Erzeugung der kombinierten Sensordaten, wenn der Winkeländerungswert (σ) größer oder gleich dem Schwellenwert ist.

14. Elektronische Vorrichtung nach einem der Ansprüche 11-13, wobei das Anpassen der zweiten Sensordaten das Anwenden einer Rotationsmatrix auf die zweiten Sensordaten basierend auf dem Rotationswinkel enthält.

15. Faltbares Smartphone, das eine elektronische Vorrichtung nach einem der Ansprüche 10-14 umfasst.

## Revendications

1. Procédé informatique comprenant les étapes suivantes :
générer (602) des premières données de capteur avec une première unité de mesure inertielle dans un premier couvercle d'un dispositif électronique pliable ;
générer (604) des deuxièmes données de capteur avec une deuxième unité de mesure inertielle dans un deuxième couvercle du dispositif électronique pliable ;
détecter (606) un angle de rotation (ϕ) entre le premier couvercle et le deuxième couvercle basé sur les premières et deuxièmes données de capteur ;
dans lequel le procédé informatique comprend en outre les étapes suivantes :
générer (608) des deuxièmes données de capteur après rotation en ajustant les deuxièmes données de capteur en se basant sur l'angle de rotation ; et
générer (610) des données de capteur combinées en combinant les premières données de capteur et les deuxièmes données de capteur après rotation.

2. Procédé selon la revendication 1, dans lequel l'ajustement des deuxièmes données de capteur comprend le fait d'appliquer aux deuxièmes données de capteur une matrice de rotation basée sur l'angle de rotation.

3. Procédé selon la revendication 1 ou 2, comprenant les étapes suivantes :
générer une première valeur de précision (120, Précision 1) basée sur les premières et deuxièmes données de capteur ; et
générer les données de capteur combinées (126) basées sur la première valeur de précision.

4. Procédé selon la revendication 3, comprenant le fait de générer une valeur de changement d'angle (σ) indiquant à quelle vitesse l'angle de rotation (ϕ) change.

5. Procédé selon la revendication 4, comprenant les étapes suivantes :
générer les données de capteur combinées si la valeur de changement d'angle est inférieure à une valeur de seuil ; et
arrêter la génération des données de capteur combinées si la valeur de changement d'angle est supérieure ou égale à la valeur de seuil.

6. Procédé selon la revendication 3, comprenant le fait de générer une deuxième valeur de précision (126, Précision 2) pour le capteur combiné basée sur la valeur de changement d'angle.

7. Procédé selon l'une quelconque des revendications précédentes, dans lequel les premières données de capteur comprennent des premières données d'accéléromètre et des premières données de gyroscope, tandis que les deuxièmes données de capteur comprennent des deuxièmes données d'accéléromètre et des deuxièmes données de gyroscope, et dans lequel les données de capteur combinées comprennent des données d'accéléromètre combinées et des données de gyroscope combinées.

8. Procédé selon l'une quelconque des revendications précédentes, dans lequel la génération de données de capteur combinées comprend le fait de calculer la moyenne des premières données de capteur et des deuxièmes données de capteur après rotation.

9. Procédé selon l'une quelconque des revendications précédentes, dans lequel la génération de données de capteur combinées comprend les opérations suivantes :
appliquer un premier poids aux premières données de capteur en se basant sur un niveau de bruit des deuxièmes données de capteur après rotation ;
appliquer un deuxième poids aux deuxièmes données de capteur après rotation en se basant sur un niveau de bruit des premières données de capteur ; et
générer une moyenne pondérée des premières données de capteur et des deuxièmes données de capteur basée sur le premier poids et le deuxième poids.

10. Dispositif électronique comprenant :
un premier couvercle (102) comportant une première unité de mesure inertielle (106a) configurée pour générer des premières données de capteur inertielles ;
un deuxième couvercle (104) comportant une deuxième unité de mesure inertielle (106b) configurée pour générer des deuxièmes données de capteur inertielles ;
une unité de traitement de capteur (108) configurée pour :
détecter (606) un angle de rotation (ϕ) entre le premier couvercle et le deuxième couvercle basé sur les premières données de capteur et les deuxièmes données de capteur ;
dans lequel l'unité de traitement de capteur est configurée en outre pour :
générer (608) des deuxièmes données de capteur après rotation en ajustant les deuxièmes données de capteur en se basant sur l'angle de rotation ; et
générer (610) des données de capteur combinées en combinant les premières données de capteur et les deuxièmes données de capteur après rotation.

11. Dispositif électronique selon la revendication 10, dans lequel le premier couvercle (102) est accouplé à rotation au deuxième couvercle (104), en particulier par une charnière (113), et dans lequel l'unité de traitement de capteur (108) est configurée pour générer une première valeur de précision (Précision 1) basée sur les premières et deuxièmes données de capteur et pour générer les données de capteur combinées basées sur la première valeur de précision.

12. Dispositif électronique selon la revendication 11, dans lequel l'unité de traitement de capteur (108) est configurée pour générer une valeur de changement d'angle (σ) indiquant à quelle vitesse l'angle de rotation (ϕ) change.

13. Dispositif électronique selon la revendication 12, dans lequel l'unité de traitement de capteur (108) est configurée pour :
générer les données de capteur combinées si la valeur de changement d'angle (σ) est inférieure à une valeur de seuil ; et
arrêter la génération des données de capteur combinées si la valeur de changement d'angle (σ) est supérieure ou égale à la valeur de seuil.

14. Dispositif électronique selon l'une quelconque des revendications 11 à 13, dans lequel l'ajustement des deuxièmes données de capteur comprend le fait d'appliquer aux deuxièmes données de capteur une matrice de rotation basée sur l'angle de rotation.

15. Mobile multifonction pliable comprenant un dispositif électronique selon l'une quelconque des revendications 10 à 14.
